# EUROPÄISCHE PATENTSCHRIFT

(11) **EP 3 663 730 B1**
(45) Veröffentlichungstag und Bekanntmachung des Hinweises auf die Patenterteilung: **02.08.2023**
(21) Anmeldenummer: 18210513.0
(22) Anmeldetag: 05.12.2018
(51) Int. Cl.: G01G 19/08, G01G 19/12, B60P 3/00, B62D 33/04

(54) **VERFAHREN ZUM BESTIMMEN, OB EIN LADERAUM EINES NUTZFAHRZEUGS EINEN ODER MEHRERE FÜR EINE WEITERE BELADUNG NUTZBARE LADERAUMBEREICHE AUFWEIST**
DETERMINATION METHOD OF WHETHER A CARGO COMPARTMENT OF A COMMERCIAL VEHICLE CONTAINS ONE OR MORE USABLE SPACE AREAS FOR ADDITIONAL LOADING
PROCÉDÉ DE DÉTERMINATION SI UN COMPARTIMENT DE CHARGEMENT D'UN VÉHICULE UTILITAIRE COMPORTE UNE OU UNE PLURALITÉ DE ZONES DE COMPARTIMENT DE CHARGEMENT UTILISABLES POUR UN CHARGEMENT SUPPLÉMENTAIRE

(43) Veröffentlichungstag der Anmeldung: 10.06.2020
(73) Patentinhaber: Schmitz Cargobull AG, 48341 Altenberge (DE)
(72) Erfinder: Tappe, Andreas, 48493 Wettringen (DE); Klement, Roland, 82407 Haunshofen (DE); Hey, Jeffrey, 99867 Gotha (DE); Schanzmann, Martin, 46395 Bocholt (DE); Diemon, Christian, 48565 Steinfurt (DE); Roters, Mark, 48619 Heek (DE)
(74) Vertreter: Cohausz & Florack

(56) Entgegenhaltungen:
- DE-B3-102005 001 480

## Beschreibung

### Gebiet

Beispielhafte Ausführungsformen der Erfindung betreffen das Bestimmen, ob ein Laderaum eines Nutzfahrzeugs einen oder mehrere für eine weitere Beladung nutzbare Laderaumbereiche aufweist.

### Hintergrund

Im Stand der Technik sind verschiedene beispielsweise sensor- und/oder kamerabasierte Verfahren zum Erkennen von unbelegten Laderaumbereichen in einem Laderaum eines Nutzfahrzeugs bekannt. Beispiele solcher Verfahren sind beispielsweise in den veröffentlichten Patentanmeldungen
DE102005001480B3,
DE102015002380A1, EP3293046A1 und DE102017111623A1 beschrieben.

### Zusammenfassung einiger beispielhafter Ausführungsformen der Erfindung

Die aus dem Stand der Technik bekannten Verfahren lassen jedoch nur bedingt Rückschlüsse auf die für eine weitere Beladung tatsächlich nutzbaren Laderaumbereiche des Nutzfahrzeugs zu. Die vorliegende Erfindung hat sich daher unter anderem die Aufgabe gestellt, diese Probleme zu überwinden und unter anderem ein Verfahren bereitzustellen, das es ermöglicht, Rückschlüsse auf die für eine weitere Beladung tatsächlich nutzbaren Laderaumbereiche des Nutzfahrzeugs zu ziehen.

In der Erfindung nach Anspruch 1, wird ein Verfahren zum Bestimmen, ob ein Laderaum eines Nutzfahrzeugs einen oder mehrere für eine weitere Beladung nutzbare Laderaumbereiche aufweist, und wobei der Laderaum in eine Vielzahl von Laderaumbereiche unterteilbar ist, offenbart, wobei das Verfahren umfasst:
- Erkennen von unbelegten Laderaumbereichen in dem Laderaum zumindest teilweise basierend auf durch einen oder mehrere Laderaumsensoren erfasste Laderaumsensorinformationen;
- Bestimmen und/oder Schätzen eines Gesamtgewichts des Nutzfahrzeugs zumindest teilweise basierend auf durch einen oder mehrere Gewichtssensoren erfasste Gewichtssensorinformationen und/oder durch Nutzfahrzeugsensoren erfasste und/oder durch Nutzfahrzeugkomponenten bereitgestellte Nutzfahrzeuginformationen;
- Bestimmen, zumindest teilweise basierend auf den als unbelegt erkannten Laderaumbereichen und dem bestimmten und/oder geschätzten Gesamtgewicht des Nutzfahrzeugs, ob der Laderaum des Nutzfahrzeugs einen oder mehrere für eine weitere Beladung nutzbare Laderaumbereiche aufweist.

Das offenbarte Verfahren gemäß der Erfindung wird beispielsweise durch eine Vorrichtung (z.B. die unten offenbarte Vorrichtung) ausgeführt.

Gemäß der Erfindung wird ferner eine Vorrichtung offenbart, wobei die Vorrichtung eingerichtet ist zur Ausführung und/oder Steuerung des offenbarten Verfahrens oder jeweilige Mittel zur Ausführung und/oder Steuerung der Schritte des offenbarten Verfahrens umfasst Dabei können entweder alle Schritte des offenbarten Verfahrens von den Mitteln gesteuert werden, oder alle Schritte des offenbarten Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden. Die Mittel können Hardware- und/oder Software-Komponenten umfassen.

Die Mittel können beispielsweise mindestens einen Speicher mit Programmanweisungen eines Computerprogramms (z.B. des Computerprogramms gemäß dem ersten Aspekt der Erfindung) und mindestens einen Prozessor ausgebildet zum Ausführen von Programmanweisungen aus dem mindestens einen Speicher umfassen. Dementsprechend soll auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das offenbarte Verfahren auszuführen und/oder zu steuern.

Alternativ oder zusätzlich können die Mittel ferner eine oder mehrere Kommunikationsschnittstellen (z.B. einen oder mehrere drahtlose und/oder drahtgebundene Netzwerkschnittstellen wie einen oder mehrere Netzwerkadapter) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die offenbarte Steuer- und Auswertevorrichtung auch andere nicht aufgeführte Mittel umfassen kann.

Zum Beispiel ist die offenbarte Vorrichtung eine Steuer- und Auswertevorrichtung eines Nutzfahrzeugs und/oder für ein Nutzfahrzeug. Alternativ kann die offenbarte Vorrichtung ein Server (z.B. ein Telematikserver oder ein Server eines Transport- oder Dispositionsdienstes) oder eine Benutzervorrichtung wie eine tragbare Benutzervorrichtung (z.B. ein Smartphone, ein Tablet-Computer, ein Notebook-Computer, ...) sein. Es versteht sich, dass die Erfindung nicht auf diese Beispiele beschränkt ist

Gemäß der Erfindung wird ferner ein Nutzfahrzeug und/oder ein Nutzfahrzeugaufbau offenbart, wobei das Nutzfahrzeug und/oder der Nutzfahrzeugaufbau umfasst:
- einen durch Begrenzungsflächen gebildeten Laderaum;
- die offenbarte Vorrichtung.

Gemäß der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die offenbarte Vorrichtung) zu veranlassen, das offenbarte Verfahren auszuführen und/oder zu steuern.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Im Folgenden werden die Eigenschaften des offenberaten Verfahrens, der offenbarten Vorrichtung, des offenbarten Nutzfahrzeugs, des offenbarten Nutzfahrzeugsaufbau und des offenbarten Computerprogramms - teilweise beispielhaft - beschrieben.

Ein Nutzfahrzeug ist zum Beispiel ein Lastkraftwagen, ein Anhänger, ein Sattelauflieger oder ein Zuggespann (z.B. umfassend einen Lastkraftwagen und einen Anhänger oder einen Sattelauflieger). Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

Die Erfindung ermöglicht das Bestimmen, ob ein Laderaum eines Nutzfahrzeugs einen oder mehrere für eine weitere Beladung nutzbare Laderaumbereiche aufweist.

Dabei soll unter einem Laderaumbereich ein Bereich mit einem vorgegebenen Volumen und/oder einer vorgegebenen Grundfläche verstanden werden. Beispielsweise ist der Laderaum in eine Vielzahl solcher Laderaumbereiche unterteilbar (z.B. gedanklich unterteilbar) und/oder unterteilt (z.B. durch Markierungen im Laderaumboden unterteilt).

Zum Beispiel repräsentieren und/oder enthalten die Laderaumsensorinformationen für jeden der Laderaumbereiche eine oder mehrere Sensorinformationen, die charakteristisch dafür sind, ob der jeweilige Laderaumbereich belegt und/oder unbelegt ist.

Dabei soll unter einem belegten Laderaumbereich beispielsweise ein Laderaumbereich verstanden werden, in dem sich zumindest teilweise ein Transportgut befindet; und/oder ein unbelegter Laderaumbereich ist beispielsweise ein Laderaumbereich, in dem sich kein Transportgut befindet. Ein Transportgut ist beispielsweise ein Stückgut und/oder Schüttgut und/oder Flüssiggut. Ein Transportgut kann sich beispielsweise in einem Transportbehälter und/oder auf einer Transportpalette befinden.

Unter dem Erkennen von unbelegten Laderaumbereichen in dem Laderaum zumindest teilweise basierend auf durch einen oder mehrere Laderaumsensoren erfasste Laderaumsensorinformationen soll beispielsweise verstanden werden, dass die Laderaumsensorinformation beispielsweise ausgewertet werden, um zu bestimmen, ob es unbelegte Laderaumbereiche im Laderaum gibt und/oder welche Laderaumbereich im Laderaum unbelegt sind. Das Auswerten kann gemäß vorgegebenen Regeln wie einem Auswertungsalgorithmus und/oder gemäß einem Algorithmus zum maschinellen Lernen (z.B. einem Algorithmus zum überwachten oder unüberwachten Lernen) erfolgen. Konkrete Beispiele für das Erkennen von unbelegten Laderaumbereichen in dem Laderaum sind die aus dem Stand der Technik bekannten sensor- und/oder kamerabasierte Verfahren zum Erkennen von unbelegten Laderaumbereichen in einem Laderaum eines Nutzfahrzeugs erfolgen. Als Ergebnis des Erkennens werden beispielsweise Belegungsinformationen erhalten, die die als unbelegt und/oder als belegt erkannten Laderaumbereiche repräsentieren und/oder die Anzahl der als unbelegt und/oder als belegt erkannten Laderaumbereiche repräsentieren.

Das Gesamtgewicht des Nutzfahrzeugs ist beispielsweise das derzeitige Gewicht des Nutzfahrzeugs und seiner Beladung (z.B. Leergewicht des Nutzfahrzeugs zuzüglich Beladungsgewicht (z.B. Gewicht der Transportgüter, des Kraftstoffs und transportierter Personen wie des Fahrers)).

Zum Beispiel sind die Gewichtssensorinformationen und/oder die Nutzfahrzeuginformationen charakteristisch für das Gesamtgewicht des Nutzfahrzeugs. Alternativ oder zusätzlich können die Gewichtssensorinformationen und/oder die Nutzfahrzeuginformationen Sensorinformationen enthalten und/oder repräsentieren, die jeweils für einzelne Bestandteile des Gesamtgewichts des Nutzfahrzeugs wie das Leergewicht des Nutzfahrzeugs, das Gewicht der Transportgüter, das Gewicht des Kraftstoffs im Tank des Nutzfahrzeugs und/oder das Gewicht transportierter Personen wie des Fahrers des Nutzfahrzeugs charakteristisch sind.

Unter dem Bestimmen und/oder Schätzen des Gesamtgewichts des Nutzfahrzeugs zumindest teilweise basierend auf durch einen oder mehrere Gewichtssensoren erfasste Gewichtssensorinformationen und/oder durch Nutzfahrzeugsensoren erfasste Nutzfahrzeugsensorinformationen soll beispielsweise verstanden werden, dass das Gesamtgewicht des Nutzfahrzeugs zumindest teilweise basierend auf den Gewichtssensorinformationen und/oder den Nutzfahrzeugsensorinformationen bestimmt und/oder geschätzt werden soll. Beim Bestimmen wird beispielsweise ein durch die Gewichtssensorinformationen und/oder Nutzfahrzeuginformationen repräsentiertes Gesamtgewicht des Nutzfahrzeugs oder die Summe der durch die Gewichtssensorinformationen und/oder Nutzfahrzeuginformationen repräsentierten Teilgewichte des Nutzfahrzeugs als Gesamtgewicht des Nutzfahrzeugs bestimmt. Dies ist jedoch nur möglich, wenn die Gewichtssensorinformationen und/oder Nutzfahrzeuginformationen das Gesamtgewicht oder Teilgewichte, deren Summe das Gesamtgewicht entspricht, des Nutzfahrzeugs repräsentieren, wie es zum Beispiel der Fall ist, wenn die Gewichtssensorinformationen durch eine Fahrzeugwaage erfasst werden. Repräsentieren die Gewichtssensorinformationen und/oder Nutzfahrzeuginformationen jedoch nicht das Gesamtgewicht oder Teilgewichte, deren Summe das Gesamtgewicht entspricht, des Nutzfahrzeugs, wird das Gesamtgewicht des Nutzfahrzeugs beispielsweise geschätzt Dies ist zum Beispiel der Fall, wenn die Gewichtssensorinformationen und/oder Nutzfahrzeuginformationen nur das Gewicht der in den Laderaum des Nutzfahrzeugs geladenen Transportgüter repräsentieren. In diesem Fall kann das Gesamtgewicht des Nutzfahrzeugs geschätzt werden, indem die Summe des durch die Gewichtssensorinformationen repräsentierten Gewichts der in den Laderaum des Nutzfahrzeugs geladenen Transportgüter und des Leergewichts des Nutzfahrzeugs sowie einem Sicherheitszuschlag (z.B. 500 kg oder 750 kg) bestimmt wird. Das Leergewicht des Nutzfahrzeugs und der Sicherheitszuschlag (z.B. für Unsicherheiten wie das Gewicht des Kraftstoffs und des Fahrers) können beispielsweise vorgegeben sein.

Das Bestimmen und/oder Schätzen kann gemäß vorgegebenen Regeln wie einem vorgegebenen Algorithmus (z.B. einem Schätzalgorithmus) erfolgen. Es versteht sich, dass das Bestimmen und/oder Schätzen auch gemäß einem Algorithmus zum maschinellen Lernen (z.B. einem Algorithmus zum überwachten oder unüberwachten Lernen) erfolgen kann. Es versteht sich, dass das bestimmte und/oder geschätzte Gesamtgewicht des Nutzfahrzeugs vom tatsächlichen Gesamtgewicht des Nutzfahrzeugs abweichen kann. Als Ergebnis des Bestimmens und/oder Schätzens des Gesamtgewichts des Nutzfahrzeugs werden beispielsweise Gesamtgewichtsinformationen erhalten, die das bestimmte und/oder geschätzte Gesamtgewicht des Nutzfahrzeugs repräsentieren.

Dass das Bestimmen, ob der Laderaum des Nutzfahrzeugs einen oder mehrere für eine weitere Beladung nutzbare Laderaumbereiche aufweist, zumindest teilweise auf den als unbelegt erkannten Laderaumbereichen und dem bestimmten und/oder geschätzten Gesamtgewicht des Nutzfahrzeugs basiert soll beispielsweise derart verstanden werden, dass die Ergebnisse des oben offenbarten Erkennens von unbelegten Laderaumbereichen in dem Laderaum und des Bestimmens und/oder Schätzens eines Gesamtgewichts des Nutzfahrzeugs beim Bestimmen, ob der Laderaum des Nutzfahrzeugs einen oder mehrere für eine weitere Beladung nutzbare Laderaumbereiche aufweist, berücksichtigt werden. Das Bestimmen kann gemäß vorgegebenen Regeln (z.B. einem Algorithmus) und/oder gemäß einem Algorithmus zum maschinellen Lernen (z.B. einem Algorithmus zum überwachten oder unüberwachten Lernen) erfolgen.

Zum Beispiel kann vorgegeben sein, dass nur dann, wenn das bestimmte und/oder geschätzte Gesamtgewicht geringer als das zulässige Gesamtgewicht des Nutzfahrzeugs ist und unbelegte Laderaumbereiche im Laderaum des Nutzfahrzeugs erkannt werden/wurden, bestimmt wird, dass der Laderaum des Nutzfahrzeugs einen oder mehrere für eine weitere Beladung nutzbare Laderaumbereiche aufweist. Andernfalls wird beispielsweise bestimmt, dass der Laderaum des Nutzfahrzeugs keinen für eine weitere Beladung nutzbaren Laderaumbereich aufweist.

Unter dem zulässigen Gesamtgewicht des Nutzfahrzeugs soll beispielsweise das durch die Zulassungsbehörde und/oder das gesetzliche vorgeschriebene maximale zulässige Gewicht des Nutzfahrzeugs verstanden werden. In der Bundesrepublik Deutschland kann eine solche Vorschrift beispielsweise § 34 der Straßenverkehrs-Zulassungs-Ordnung entnommen werden. Es versteht sich, dass die Erfindung jedoch nicht auf die entsprechenden Vorschriften der Bundesrepublik Deutschland beschränkt ist, sondern auch mit den entsprechenden Vorschriften anderer Staaten anwendbar ist.

Alternativ oder zusätzlich kann auch vorgesehen sein, dass das zulässige Gesamtgewicht des Nutzfahrzeugs dem technisch und/oder bauartbedingten maximal zulässigen Gesamtgewicht entspricht. Das technisch und/oder bauartbedingte maximal zulässige Gesamtgewicht des Nutzfahrzeugs wird beispielsweise vom Hersteller des Nutzfahrzeugs vorgegeben. Dabei kann für einzelne Komponenten des Nutzfahrzeugs (z.B. im Falle eines Zuggespanns, für den Lastkraftwagen und den Anhänger oder den Sattelauflieger und/oder, Falle eines mehrachsigen Nutzfahrzeugs, für die verschiedenen Achsen des Nutzfahrzeugs) jeweils ein individuelles technisch und/oder bauartbedingtes maximal zulässiges Gesamtgewicht vorgegeben sein, so dass das technisch und/oder bauartbedingten maximal zulässige Gesamtgewicht des Nutzfzahrzeugs bereits dann überschritten wird, wenn nur eines dieser individuellen technisch und/oder bauartbedingten maximal zulässigen Gesamtgewichte für eine der Komponenten des Nutzfahrzeugs überschritten wird.

Durch die Verknüpfung der Laderaumsensorinformationen mit den Gewichtssensorinformationen und/oder den Nutzfahrzeugsensorinformationen stellt die Erfindung somit eine Lösung bereit, die es ermöglicht, Rückschlüsse auf die für eine weitere Beladung tatsächlich nutzbaren Laderaumbereiche des Nutzfahrzeugs zu ziehen. Denn anders als in den im Stand der Technik beschriebenen Verfahren zum Erkennen von unbelegten Laderaumbereichen in einem Laderaum eines Nutzfahrzeugs kann bei einer Überschreitung des zulässigen Gesamtgewichts bestimmt werden, dass der Laderaum des Nutzfahrzeugs keine für eine weitere Beladung nutzbaren Laderaumbereich aufweist, obwohl unbelegte Laderaumbereiche vorhanden sind.

Ein weiterer Vorteil dieser Lösung ist dabei, dass sie keine zusätzlichen Sensoren benötigt, sondern es ausreicht durch bereits vorhandene Sensoren erfassten Sensorinformationen miteinander zu verknüpfen.

In beispielhaften Ausführungsformen der Erfindung umfasst das Verfahren ferner:
- Erhalten und/oder Erfassen der Laderaumsensorinformationen;
- Erhalten und/oder Erfassen der Gewichtssensorinformationen und/oder der Nutzfahrzeugsensorinformationen.

Sensorinformationen (z.B. Laderaumsensorinformationen, Gewichtssensorinformationen und/oder Nutzfahrzeuginformationen) repräsentieren (z.B. quantitativ oder qualitativ) beispielsweise durch einen oder mehrere Sensoren erfasste Eigenschaften und/oder Zustände (z.B. physikalische und/oder chemische Eigenschaften). Zum Beispiel können Sensorinformationen solche Eigenschaften und/oder Zustände in Form von durch einen oder mehrere Sensoren erfassten Messgrößen quantitativ repräsentieren. Ein Beispiel für eine solche erfasste Messgröße ist ein durch einen Gewichtssensor erfasster Gewichtswert. Es versteht sich jedoch, dass Sensorinformationen solche Eigenschaften und/oder Zustände auch in Form eine oder mehrere qualitative Angabe repräsentieren können. Ein Beispiel für eine solche qualitative Angabe ist beispielsweise eine Information, ob ein bestimmter Laderaumbereich von einem Laderaumsensor als belegt oder unbelegt erfasst wird.

Dementsprechend soll unter dem Erfassen von Sensorinformationen (z.B. Laderaumsensorinformationen, Gewichtssensorinformationen und/oder Nutzfahrzeuginformationen) durch einen Sensor beispielsweise das Erfassen (z.B. Messen) von Eigenschaften und/oder Zustände (z.B. um Messgrößen als Sensorinformationen zu erhalten) und/oder das Auswerten der erfassten (z.B. gemessenen) Eigenschaften und/oder Zustände (z.B. um qualitative Angaben als Sensorinformationen zu erhalten) verstanden werden.

Unter dem Erhalten von Sensorinformationen (z.B. Laderaumsensorinformationen, Gewichtssensorinformationen und/oder Nutzfahrzeuginformationen) soll beispielsweise verstanden werden, dass die Sensorinformationen empfangen werden, beispielsweise von einer entfernten Vorrichtung an der Vorrichtung, die das offenbarte Verfahren ausführt, und/oder über eine Kommunikationsverbindung empfangen werden.

Die Kommunikationsverbindung kann beispielsweise eine drahtgebundene Kommunikationsverbindung wie eine Ethernet-, CAN-, K-Leitungs-, LIN- oder Flexray-Kommunikationsverbindung sein. Ethernet ist zum Beispiel in den Standards der IEEE-802.3-Familie spezifiziert. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert Ferner kann die Kommunikationsverbindung auch eine drahtlose Kommunikationsverbindung wie eine Bluetooth, WLAN-, GSM-, UMTS- und/oder LTE-Kommunikationsverbindung sein. Die Bluetooth Spezifikationen sind derzeit unter https://www.bluetooth.com erhältlich. WLAN ist zum Beispiel in den Standards der IEEE-802.11-Familie spezifiziert. Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich. Es versteht sich, dass die Kommunikationsverbindung auch mehrere Abschnitte, beispielsweise mehrere drahtgebundene und/oder mehrere drahtlose Abschnitte und/oder zumindest einen drahtgebundenen Abschnitt und zumindest einen drahtlosen Abschnitt aufweisen kann.

In beispielhaften Ausführungsformen der Erfindung umfassen die Laderaumsensoren einen oder mehrere der folgenden Sensoren und/oder Sensoranordnungen:
- eine Lichtschranke;
- einen Lichtsensor;
- ein Photomischdetektor;
- eine Ultraschallschranke;
- ein Ultraschallsensor;
- eine Kamera;
- ein Laserscanner;
- ein Funksensor.

Zum Beispiel kann für jeden der Laderaumbereiche im Laderaum des Nutzfahrzeugs ein Laderaumsensor vorgesehen sein, der eingerichtet ist, eine Eigenschaft und/oder einen Zustand zu erfassen, der charakteristisch dafür ist, ob der jeweilige Laderaumbereich belegt und/oder unbelegt ist. Das Erkennen von belegten und/oder unbelegten Laderaumbereichen zumindest teilweise basierend auf solchen Sensorinformation, kann beispielsweise derart erfolgen, dass die Laderaumbereiche, für die die Sensorinformationen eine Eigenschaft und/oder einen Zustand zu erfassen, der charakteristisch dafür ist, dass der jeweilige Laderaumbereich belegt ist, als belegt erkannt werden und die anderen Laderaumbereich als unbelegt erkannt werden.

Eine einfache Sensoranordnung kann beispielsweise einen Signalsender und einen Signalsensor für jeden der Laderaumbereiche aufweisen. Für einen jeweiligen Laderaumbereich können diese beispielsweise derart angeordnet sein, dass ein von dem jeweiligen Signalsender (z.B. ein Lichtsender oder ein Ultraschallsender) gesendetes Signal (z.B. ein Lichtsignal oder ein Ultraschallsignal) durch ein in dem jeweiligen Laderaumbereich angeordnetes Transportgut unterbrochen wird, so dass der jeweilige Signalsensor (z.B. ein Lichtsensor oder ein Ultraschallsensor) das Signal nichterfasst, wenn der jeweilige Laderaumbereich belegt ist. Dementsprechend könnte in diesem Fall, wenn eine Unterbrechung des Signals durch den jeweiligen Signalsensor erfasst wird, die Sensorinformationen beispielsweise eine Angabe repräsentieren, dass der jeweilige Laderaumbereich belegt ist; und wenn keine Unterbrechung des Signals durch den jeweiligen Signalsensor erfasst wird, könnten die Sensorinformationen beispielsweise eine Angabe repräsentieren, dass der jeweilige Laderaumbereich unbelegt ist Der Signalsensor und der Signalsender einer solchen einfachen Sensoranordnung für einen jeweiligen Laderaumbereich können beispielsweise an gegenüberliegenden Begrenzungsflächen (z.B. Boden und Dach) des Laderaums im jeweiligen Laderaumbereich angeordnet sein. Ein Beispiel für eine solche Sensoranordnung ist eine Lichtschranke oder eine Ultraschallschranke.

Es versteht sich jedoch, dass die Erfindung nicht auf solche einfache Sensoranordnungen, die jeweils nur einen Laderaumbereich überwachen, beschränkt ist. Stattdessen können auch Sensoren und/oder Sensoranordnungen zum Einsatz kommen, die mehr als einen Laderaumbereich überwachen können wie beispielsweise eine Kamera, ein Laserscanner, ein Photomischdetektor und/oder ein Funksensor.

Zum Beispiel kann ein durch eine Kamera erfasstes Bild (z.B. ein von durch die Kamera erfasste Sensorinformationen repräsentiertes Bild) des Laderaums mit Hilfe von Bilderkennungs- und/oder - verarbeitungssalgorithmen ausgewertet werden, um für mehrere (z.B. alle) durch die Kamera überwachten Laderaumbereiche zu bestimmen, ob diese belegt oder unbelegt sind. Das Auswerten kann beispielsweise Teil des Erkennens von belegten und/oder unbelegten Laderaumbereichen sein.

Ein Laserscanner oder ein Photomischdetektor sind beispielsweise eingerichtet, den Laderaum rastermäßig durch das Aussenden von Laser- oder Lichtimpulsen und das Erfassen der reflektierten Laser- oder Lichtimpulsantwort abzutasten und basierend auf der Signallaufzeit, den Abstand zum jeweiligen Reflektionsobjekt zu bestimmen. Ferner ist auch denkbar, dass ein Funksensor in Zusammenspiel mit einem Funksender (z.B. ein Funk-Sende-Empfänger) den Laderaum rastermäßig durch das Aussenden von Funksignalimpulsen und das Erfassen der reflektierten Funksignalimpulsantwort abzutasten und basierend auf der Signallaufzeit, den Abstand zum jeweiligen Reflektionsobjekt zu bestimmen. Als Ergebnis eines solchen Abtastens werden beispielsweise Sensorinformationen erhalten, die ein Abstastbild repräsentieren, das anschließend ebenfalls mit Hilfe von Bilderkennungs- und/oder -verarbeitungssalgorithmen ausgewertet werden kann, um für mehrere (z.B. alle) durch die Kamera überwachten Laderaumbereiche zu bestimmen, ob diese belegt oder unbelegt sind. Das Auswerten kann beispielsweise Teil des Erkennens von belegten und/oder unbelegten Laderaumbereichen sein.

In beispielhaften Ausführungsformen der Erfindung sind die Gewichtssensoren Teil einer oder mehrerer der folgenden Vorrichtungen:
- eine Fördervorrichtung, insbesondere ein Gabel- und/oder Hubstapler;
- eine Nutzfahrzeugwaage;
- ein Transportgut;
- ein Transportbehälter, insbesondere eine Transportpaletter und/oder eine Gitterbox..

Diese Vorrichtungen sollen beispielsweise als von der Vorrichtung, die das offenbarte Verfahren ausführt, entfernte Vorrichtungen verstanden werden, so dass die jeweiligen Gewichtssensorinformationen von einer oder mehrerer dieser Vorrichtungen beispielsweise über eine drahtlose Kommunikationsverbindung empfangen werden. Auch sind diese Vorrichtungen beispielsweise kein Teil des Nutzfahrzeugs. Anstatt das Nutzfahrzeug mit zusätzlichen Sensoren auszurüsten, wird gemäß diesen Ausführungsformen somit auf durch Sensoren anderer Vorrichtungen erfasste Sensorinformationen zurückgegriffen.

Ein Beispiel für einen Gewichtssensor ist ein Kraftaufnehmer und/oder eine Wägezelle.

Unter einer Fördervorrichtung soll insbesondere ein Flurförderfahrzeug wie ein Gabel- und/oder Hubstapler verstanden werden. Die Fördervorrichtung wird beispielsweise beim Laden des Nutzfahrzeugs zum Transport der Transportgüter zum Nutzfahrzeug und/oder in den Laderaum des Nutzfahrzeugs verwendet Dementsprechend sind ein oder mehrere Gewichtssensoren der Fördervorrichtung eingerichtet, das Gewicht der in den Laderaum des Nutzfahrzeugs geladenen Transportgüter zu erfassen und entsprechende Gewichtssensorinformationen an die Vorrichtung, die das Verfahren ausführt, zu senden (z.B. über eine drahtlose Kommunikationsverbindung zu senden).

Alternativ oder zusätzlich kann auch ein in den Laderaum geladenes Transportgut und/oder eine in den Laderaum geladener Transportbehälter, der mit einem Transportgut beladen ist, einen oder mehrere Gewichtssensoren aufweisen, die eingerichtet sind, das Gewicht des Transportguts zu erfassen und entsprechende Gewichtssensorinformationen an die Vorrichtung, die das Verfahren ausführt, zu senden (z.B. über eine Kommunikationsverbindung zu senden). Vorzugsweise sind in einer solchen Ausführungsform alle in den Laderaum geladenen Transportgüter und/oder alle in den Laderaum geladenen Transportbehälter mit solchen Gewichtssensoren ausgestattet.

Ein Beispiel für einen Transportbehälter ist eine Transportpalette und/oder eine Gitterbox. Eine Transportpalette kann eine sogenannte Europoolpalette sein, die nach EN 13698-1 genormt ist und eine Grundfläche von 0,96 Quadratmetern (0,4 Lademeter) mit den Außenabmessungen 1,2 m × 0,8 m × 0,144 m (Länge × Breite × Höhe) aufweist. Eine Gitterbox kann eine sogenannte Eurogitterbox sein, die nach EN 13626 genormt ist und die Außenabmessungen 1,24 m × 0,835 m × 0,97 m (Länge × Breite × Höhe) aufweist.

Das Gesamtgewicht des Nutzfahrzeugs kann beispielsweise zumindest teilweise basierend auf Gewichtssensorinformationen, die durch Gewichtssensoren einer Fördervorrichtung und/oder eines oder mehrerer Transportgüter und/oder einer oder mehrerer Transportpaletten erfasst werden, geschätzt werden, indem die Summe des durch die Gewichtssensorinformationen repräsentierten Gewichts der in den Laderaum des Nutzfahrzeugs geladenen Transportgüter und des Leergewichts des Nutzfahrzeugs sowie einem Sicherheitszuschlag (z.B. 500 kg oder 750 kg) bestimmt wird. Der Sicherheitszuschlag kann beispielsweise zum Ausgleich von Schätzungenauigkeiten aufgrund des Gewichts des im Tank befindlichen Kraftstoffs und des Fahrers dienen. Das Leergewicht des Nutzfahrzeugs und der Sicherheitszuschlag (z.B. für Unsicherheiten wie das Gewicht des Kraftstoffs und des Fahrers) können beispielsweise vorgegeben sein (z.B. als Teil eines vorgegebenen Schätzalgorithmus).

Beispiele für Nutzfahrzeugwaagen sind eine Brückenwaage (z.B. zum Erfassen des Gesamtgewichts des Nutzfahrzeugs) oder eine Achslastwaage (z.B. zum Erfassen des auf einer Achse des Nutzfahrzeugs lastenden Teilgewichts des Nutzfahrzeugs). Ein oder mehrere Gewichtssensoren einer Nutzfahrzeugwaage sind beispielsweise eingerichtet, das Gesamtgewicht des Nutzfahrzeugs oder ein Teilgewicht des Nutzfahrzeugs zu erfassen und entsprechende Gewichtssensorinformationen an die Vorrichtung, die das Verfahren ausführt, zu senden (z.B. über eine Kommunikationsverbindung zu senden).). Das Gesamtgewicht des Nutzfahrzeugs kann beispielsweise als das durch von einer solchen Nutzfahrzeugwaage erfassten Gewichtssensorinformationen repräsentierte Gesamtgewicht oder die Summe der dadurch repräsentierten Teilgewichte bestimmt werden. Es versteht sich, dass zusätzlich zum geschätzten Gesamtgewicht noch ein Sicherheitszuschlag (z.B. 500 kg oder 750 kg) hinzuaddiert werden kann, um Unsicherheiten auszugleichen.

In beispielhaften Ausführungsformen der Erfindung werden die Nutzfahrzeuginformationen zumindest teilweise durch einen oder mehrere der folgenden Nutzfahrzeugsensoren des Nutzfahrzeugs erfasst:
- ein Gewichtssensor;
- ein Achslastsensor, insbesondere ein Drucksensor eines Luftfederbalgs.

Dementsprechend kann es sich bei den Nutzfahrzeuginformationen zumindest teilweise um durch einen oder mehrere Nutzfahrzeugsensoren erfasste Sensorinformationen handeln.

Die Nutzfahrzeugsensoren sind beispielsweise Teil des Nutzfahrzeugs. Wenn die Vorrichtung, die das Verfahren ausführt ebenfalls Teil des Nutzfahrzeugs ist, können die durch diese Nutzfahrzeugsensoren erfassten Nutzfahrzeuginformationen beispielsweise über eine drahtgebundene Kommunikationsverbindung empfangen werden.

Wie oben offenbart, ist ein Beispiel für einen Gewichtssensor ein Kraftaufnehmer und/oder eine Wägezelle. Ein oder mehrere solcher Gewichtssensoren können beispielsweise als Nutzfahrzeugsensoren derart in dem Nutzfahrzeug angeordnet und/oder eingerichtet sein, dass sie das Gewicht der in den Laderaum geladenen Transportgüter erfassen können. Das Gesamtgewicht des Nutzfahrzeugs kann beispielsweise zumindest teilweise basierend auf Nutzfahrzeuginformationen, die durch Gewichtssensoren des Nutzahrzeugs erfasst werden, bestimmt und/oder geschätzt werden, indem die Summe des durch die Nutzfahrzeuginformationen repräsentierten Gewichts der in den Laderaum des Nutzfahrzeugs geladenen Transportgüter und des Leergewichts des Nutzfahrzeugs sowie einem Sicherheitszuschlag (z.B. 500 kg oder 750 kg) bestimmt wird. Wie oben offenbart kann der Sicherheitszuschlag beispielsweise zum Ausgleich von Ungenauigkeiten aufgrund des Gewichts des im Tank befindlichen Kraftstoffs und des Fahrers dienen. Das Leergewicht des Nutzfahrzeugs und der Sicherheitszuschlag (z.B. für Unsicherheiten wie das Gewicht des Kraftstoffs und des Fahrers) können beispielsweise vorgegeben sein (z.B. als Teil eines vorgegebenen Schätzalgorithmus).

Ein Achslastsensor ist beispielsweise eingerichtet, eine für das auf einer Achse des Nutzfahrzeug lastenden Gewicht charakteristische Größe und/oder Eigenschaft zu erfassen. Ein Beispiel für einen solchen Achslastsensor ist ein Drucksensor eines Luftfederbalgs einer Achse des Nutzfahrzeugs, der den Luftdruck im Luftfederbalg erfasst. Dieser Luftdruck ist charakteristisch für das Gewicht, das auf dem jeweiligen Luftfederbalg und somit auf der jeweiligen Achse des Nutzfahrzeugs lastet. Das Gesamtgewicht des Nutzfahrzeugs kann beispielsweise zumindest teilweise basierend auf Nutzfahrzeuginformationen, die durch einen oder mehrere Achslastsensoren des Nutzahrzeugs erfasst werden, bestimmt und/oder geschätzt werden, indem basierend auf den Nutzfahrzeuginformationen das Gewicht der in den Laderaum des Nutzfahrzeugs geladenen Transportgüter bestimmt und mit dem Leergewichts des Nutzfahrzeugs sowie einem Sicherheitszuschlag (z.B. 500 kg oder 750 kg) addiert wird. Das Gewicht der in den Laderaum des Nutzfahrzeugs geladenen Transportgüter entspricht beispielsweise der Differenz der Summe der derzeit auf den einzelnen Achsen lastenden Gewichte, die durch die von den Achslastsensoren erfassten Nutzfahrzeuginformationen repräsentiert werden, und der Summe der auf den einzelnen Achsen lastenden Gewichte, die von den Achslastsensoren erfasst werden, wenn das Nutzfahrzeug unbeladen ist. Wie oben offenbart kann der Sicherheitszuschlag beispielsweise zum Ausgleich von Ungenauigkeiten aufgrund des Gewichts des im Tank befindlichen Kraftstoffs und des Fahrers dienen. Das Leergewicht des Nutzfahrzeugs, der Sicherheitszuschlag (z.B. für Unsicherheiten wie das Gewicht des Kraftstoffs und des Fahrers) sowie die Summe der auf den einzelnen Achsen lastenden Gewichte, die von den Achslastsensoren erfasst werden, wenn das Nutzfahrzeug unbeladen ist, können beispielsweise vorgegeben sein (z.B. als Teil eines vorgegebenen Schätzalgorithmus).

Ein Vorteil dieser Ausführungsformen der Erfindung ist, dass solche Nutzfahrzeugsensoren in einer Vielzahl von Nutzfahrzeugen bereits vorgesehen sind, so dass keine zusätzliche Ausrüstung der Nutzfahrzeuge mit zusätzlichen Nutzfahrzeugen notwendig ist.

In beispielhaften Ausführungsformen der Erfindung werden die Nutzfahrzeuginformationen von einem oder mehreren der folgenden Nutzfahrzeugkomponenten des Nutzfahrzeugs bereitgestellt:
- ein Steuergerät, insbesondere ein Getriebe- und/oder Motorsteuergerät;
- ein Getriebe- und/oder Motorsystem.

Die Nutzfahrzeugkomponenten sind beispielsweise Teil des Nutzfahrzeugs und eingerichtet, das Gesamtgewicht des Nutzfahrzeugs zu bestimmen und/oder zu schätzen. Ein Beispiel für eine solche im Stand der Technik bekannte Nutzfahrzeugkomponente ist ein Steuergerät wie ein Getriebe- und/oder Motorsteuergerät (z.B. eines Getriebe- und/oder Motorsystems), das eingerichtet ist, das Gesamtgewicht des Nutzfahrzeugs zu bestimmen und/oder zu schätzen, um eine Motor- und/oder Getriebekonfiguration (z.B. Motorkennlinie und/oder Getriebeschaltpunkte) an das geschätzte Gesamtgewicht anpassen zu können. Die durch eine solche Nutzfahrzeugkomponente bereitgestellten Nutzfahrzeuginformationen repräsentieren beispielsweise das durch die Nutzfahrzeugkomponente bestimmte und/oder geschätzte Gesamtgewicht des Nutzfahrzeugs. In diesem Fall kann als Ergebnis des Bestimmens und/oder Schätzens des Gesamtgewichts des Nutzfahrzeugs zumindest teilweise basierend auf den bereitgestellten Nutzfahrzeuginformationen das durch die bereitgestellten Nutzfahrzeuginformationen repräsentierte bestimmte und/oder geschätzte Gesamtgewicht erhalten werden. Alternativ kann auch vorgesehen sein, dass zum durch die bereitgestellten Nutzfahrzeuginformationen repräsentierten bestimmten und/oder geschätzten Gesamtgewicht noch ein Sicherheitszuschlag (z.B. 500 kg oder 750 kg) hinzuaddiert werden kann, um Unsicherheiten auszugleichen.

Unter dem Bereitstellen der Nutzfahrzeuginformationen soll beispielsweise verstanden werden, dass die Nutzfahrzeuginformationen durch die Nutzfahrzeugkomponente(n) beispielsweise über eine drahtgebundene Kommunikationsverbindung an die Vorrichtung, die das Verfahren ausführt, gesendet werden.

In beispielhaften Ausführungsformen der Erfindung umfasst das Bestimmen, ob der Laderaum des Nutzfahrzeugs einen oder mehrere für eine Beladung nutzbare Laderaumbereiche aufweist:
- Bestimmen, ob das bestimmte und/oder geschätzte Gesamtgewicht des Nutzfahrzeugs unterhalb des zulässigen Gesamtgewicht des Nutzfahrzeugs liegt, wobei nur dann bestimmt wird, dass der Laderaum des Nutzfahrzeugs einen oder mehrere für eine Beladung nutzbare Laderaumbereiche aufweist, wenn bestimmt wird, dass das geschätzte Gesamtgewicht des Nutzfahrzeugs unterhalb des zulässigen Gesamtgewicht des Nutzfahrzeugs liegt, und zumindest ein unbelegter Laderaumbereich im Laderaum des Nutzfahrzeugs erkannt wird.

Wie oben offenbart, soll unter dem zulässigen Gesamtgewicht des Nutzfahrzeugs beispielsweise das durch die Zulassungsbehörde und/oder das gesetzliche vorgeschriebene maximale zulässige Gewicht des Nutzfahrzeugs verstanden werden. In der Bundesrepublik Deutschland kann eine solche Vorschrift beispielsweise § 34 der Straßenverkehrs-Zulassungs-Ordnung entnommen werden. Es versteht sich, dass die Erfindung jedoch nicht auf die entsprechenden Vorschriften der Bundesrepublik Deutschland beschränkt ist, sondern auch mit den entsprechenden Vorschriften anderer Staaten anwendbar ist.

Alternativ oder zusätzlich kann auch vorgesehen sein, dass das zulässige Gesamtgewicht des Nutzfahrzeugs dem technisch und/oder bauartbedingten maximal zulässigen Gesamtgewicht entspricht. Das technisch und/oder bauartbedingte maximal zulässige Gesamtgewicht des Nutzfahrzeugs wird beispielsweise vom Hersteller des Nutzfahrzeugs vorgegeben. Dabei kann für einzelne Komponenten des Nutzfahrzeugs (z.B. im Falle eines Zuggespanns, für den Lastkraftwagen und den Anhänger oder den Sattelauflieger, und/oder, im Falle eines mehrachsigen Nutzfahrzeugs, für die verschiedenen Achsen des Nutzfahrzeugs) jeweils ein individuelles technisch und/oder bauartbedingtes maximal zulässiges Gewicht vorgegeben sein, so dass das technisch und/oder bauartbedingten maximal zulässige Gesamtgewicht des Nutzfzahrzeugs bereits dann überschritten wird, wenn nur eines dieser individuellen technisch und/oder bauartbedingten maximal zulässigen Gewichte für eine der Komponenten des Nutzfahrzeugs überschritten wird. Dementsprechend kann vorgesehen sein, dass nur dann bestimmt wird, dass der Laderaum des Nutzfahrzeugs einen oder mehrere für eine Beladung nutzbare Laderaumbereiche aufweist, wenn bestimmt wird, dass jedes dieser individuellen technisch und/oder bauartbedingten maximal zulässigen Gesamtgewichte nicht überschritten wird (z.B. dass das bestimmte und/oder geschätzte Gesamtgewicht des Nutfzahrzegus nicht zu einer Überschreitung dieser individuellen technisch und/oder bauartbedingten maximal zulässigen Gewichte führt), und zumindest ein unbelegter Laderaumbereich im Laderaum des Nutzfahrzeugs erkannt wird.

Laut der Erfindung umfasst das Bestimmen, ob der Laderaum des Nutzfahrzeugs einen oder mehrere für eine Beladung nutzbare Laderaumbereiche aufweist:
Bestimmen, ob im Laderaum des Nutzfahrzeugs zumindest ein unbelegter Laderaumbereich vorhanden ist, der für eine weitere Beladung zugänglich ist, wobei nur dann bestimmt wird, dass der Laderaum des Nutzfahrzeugs einen oder mehrere für eine Beladung nutzbare Laderaumbereiche aufweist, wenn bestimmt wird, dass im Laderaum des Nutzfahrzeugs zumindest ein unbelegter Laderaumbereich vorhanden ist, der für eine weitere Beladung zugänglich ist.

Dabei soll ein Laderaumbereich beispielsweise nur dann als zugänglich für eine weitere Beladung bestimmt werden, wenn er unmittelbar an eine für eine Beladung öffenbare Begrenzungsfläche des Laderaums (z.B. eine durch Flügeltüren gebildete Rückwand oder eine Seitenwand eines Planenaufbaus) grenzt oder zwischen dem Laderaumbereich und einer solchen für eine Beladung öffenbare Begrenzungsfläche des Laderaums nur als unbelegt erkannte Laderaumbereiche liegen. Für dieses Bestimmen können beispielsweise Regeln (z.B. in Form eines Algorithmus) vorgegeben sein.

Diese Ausführungsformen sind beispielsweise vorteilhaft, um zu verhindern, dass bestimmt wird, dass der Laderaum des Nutzfahrzeugs einen oder mehrere für eine Beladung nutzbare Laderaumbereiche aufweist, obwohl alle unbelegten Laderaumbereich für eine weitere Beladung tatsächlich nicht zugänglich sind, so dass das Nutzfahrzeug für eine weitere Beladung beispielsweise zunächst teilweise entladen werden müsste.

In beispielhaften Ausführungsformen der Erfindung umfasst das Verfahren ferner:
- Bereitstellen von Beladungsinformationen, wenn bestimmt wird, dass der Laderaum des Nutzfahrzeugs einen oder mehrere für eine Beladung nutzbare Laderaumbereiche aufweist.

Unter dem Bereitstellen der Beladungsinformationen soll beispielsweise verstanden werden, dass die Beladungsinformationen zum Abrufen durch eine entfernte Vorrichtung (z.B. über eine Kommunikationsverbindung) bereitgestellt und/oder an eine entfernte Vorrichtung (z.B. über eine Kommunikationsverbindung) gesendet werden. Eine solche entfernte Vorrichtung kann beispielsweise ein Server (z.B. ein Telematikserver oder ein Server eines Transport- oder Dispositionsdienstes) sein. Die entfernte Vorrichtung ist beispielsweise von der Vorrichtung, die das Verfahren ausführt verschieden.

Die Beladungsinformationen umfassen und/oder repräsentieren beispielsweise eine oder mehrere der folgenden Angaben:
- Anzahl und/oder Fläche und/oder Volumen der als unbelegt erkannten Laderaumbereiche im Laderaum des Nutzfahrzeugs;
- Anzahl und/oder Fläche und/oder Volumen der als unbelegt erkannten Laderaumbereiche im Laderaum des Nutzfahrzeugs, für die bestimmt wurde, dass sie für eine weitere Beladung zugänglich sind;
- bestimmtes und/oder geschätztes Gesamtgewicht des Nutzfahrzeugs;
- zulässiges Gesamtgewicht des Nutzfahrzeugs;
- Differenzgewicht zwischen dem bestimmten und/oder geschätzten Gesamtgewicht des Nutzfahrzeugs und dem zulässigen Gesamtgewicht des Nutzfahrzeugs, das für eine weitere Beladung verfügbar ist;
- Nutzfahrzeugtyp des Nutzfahrzeugs;
- Ladezertifikate des Nutzfahrzeugs.

Die Anzahl und/oder Fläche und/oder Volumen der als unbelegt erkannten Laderaumbereiche im Laderaum des Nutzfahrzeugs kann beispielsweise basierend auf den als Ergebnis des Erkennens der unbelegten Laderaumbereich erhaltenen Belegungsinformationen bestimmt werden. Zum Beispiel kann für jeden der Laderaumbereich vorgegeben sein, welches Volumen und/oder welche Fläche er aufweist. Alternativ kann das Volumen und/oder die Fläche durch Multiplikation des Laderaumbereichsvolumens und/oder der Laderaumbereichsfläche berechnet werden, wenn jeder der Laderaumbereiche das gleiche Laderaumbereichsvolumens und/oder die gleiche Laderaumbereichsfläche aufweist.

Angaben zum bestimmten und/oder geschätzten Gesamtgewicht entsprechen beispielsweise den als Ergebnis des Bestimmens und/oder Schätzens erhaltenen Gewichtsinformationen, die das bestimmte und/oder geschätzte Gesamtgewicht repräsentieren. Die Angaben zum zulässigen Gesamtgewicht können beispielsweise vorgegeben sind, Zumindest teilweise basierend auf diesen Gewichtsinformationen sowie den Angaben zum zulässigen Gesamtgewicht können ferner die Angaben zum Differenzgewicht bestimmt werden.

Beispiele für Angaben zum Nutzfahrzeugtyp sind beispielsweise Angaben, die den Nutzfahrzeugtyp (z.B. Planenaufbau, Curtainsider, Kofferaufbau, für Trockenfracht und/oder für Tiefkühlfracht geeignet) repräsentieren.

Beispiele für Angaben zu Ladezertifikaten sind Angaben, die Ladezertifkate des Sattelaufliegers (z.B. Code XL, Gefahrstoffe, Pharma) repräsentieren.

Das Bereitstellen dieser Beladungsinformationen ist beispielsweise vorteilhaft, um der entfernte Vorrichtung zu ermöglichen, zu bestimmen, mit welchen Transportgütern das Nutzfahrzeug weiter beladen werden kann.

In beispielhaften Ausführungsformen der Erfindung beschreibt ein Laderaumbereich einen Bereich in dem Laderaum mit einer rechteckigen und/oder quadratischen Grundfläche und zumindest einer Seitenlänge von 0,4 m oder einem ganzzahligen Vielfachen von 0,4 m. Zum Beispiel sind beide Seitenlängen der rechteckigen Grundfläche 0,4 m oder ein ganzzahliges Vielfaches von 0,4 m. Insbesondere soll auch ein Laderaumbereich mit einer quadratischen Grundfläche als Sonderform einer rechteckigen Grundfläche mit einer Seitenlänge von 0,4 m oder einem ganzzahligen Vielfachen von 0,4 m als offenbart verstanden werden. Dementsprechend können Laderaumbereiche mit einer solchen Grundfläche und Seitenlänge als belegt und unbelegt erkannt werden.

Ein typisches Maß im Transportwesen sind 0,4 m oder ganzzahlige Vielfache von 0,4m. So hat eine Europalette beispielsweise die Maße 1,2 m × 0,8 m; die Ladefläche eines LKWs, Sattelaufliegers oder Anhängers ist typischerweise 2,4 m breit und weist typischerweise 34 Stellplätze für Europaletten auf.

Das Erkennen von belegten und/oder unbelegten Laderaumbereichen mit einer quadratischen Grundfläche (d.h. einer Grundfläche am Laderaumboden) und einer Seitenlänge von 0,4 m ist somit gerade für Anwendungen im Transportwesen ausreichend. So ermöglicht eine solche (gedankliche oder tatsächliche) Unterteilung des Laderaums das Erkennen von belegten und unbelegten Palettenstellplätzen unabhängig davon, ob die Europaletten mit der Längsrichtung in Fahrtrichtung oder mit der Längsrichtung quer zur Fahrtrichtung geladen werden. Es versteht sich jedoch, dass je nach Anwendungsfall auch andere Laderaumbereiche mit einer rechteckigen Grundfläche (z.B. mit einer Seitenlänge von 0,4 m und einer Seitenlänge von 0,8 m) vorteilhaft sein können.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung verstanden werden.

Es zeigen:
- Fig. 1: eine schematische Darstellung einer beispielhaften Ausführungsform einer Steuer- und Auswertevorrichtung gemäß der Erfindung
- Fig. 2: schematische Darstellungen einer beispielhaften Ausführungsform eines Nutzfahrzeugs gemäß der Erfindung; und
- Fig. 3: ein Flussdiagramm einer beispielhaften Ausführungsform eines Verfahrens gemäß der Erfindung.

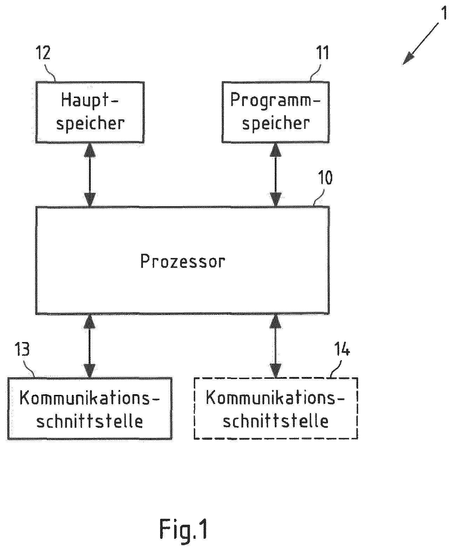

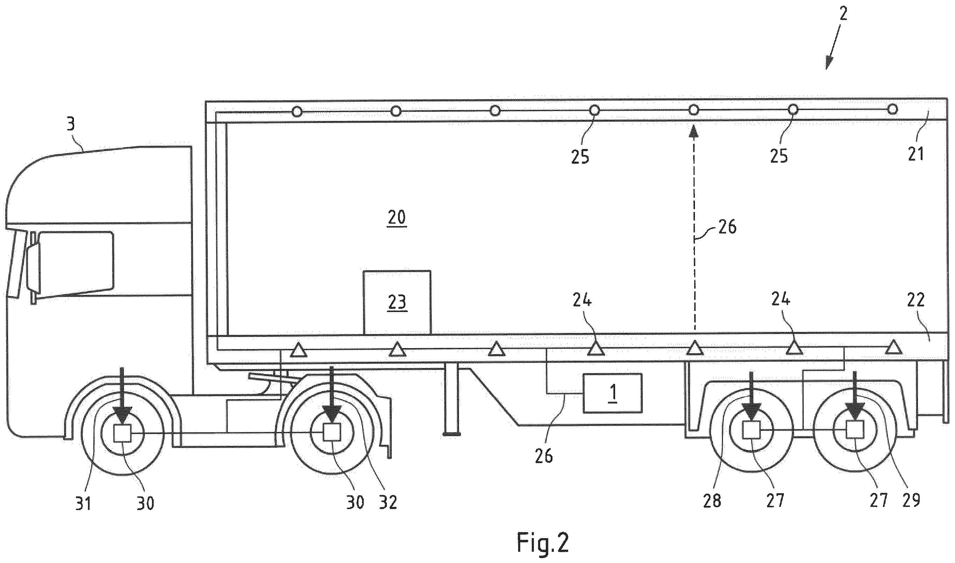

Fig. 1 ist eine schematische Darstellung einer beispielhaften Ausführungsform einer Steuer- und Auswertevorrichtung 1 gemäß der Erfindung. Die Steuer- und Auswertevorrichtung 1 kann beispielsweise Teil eines Nutzfahrzeugs (z.B. des in Fig. 2 dargestellten Nutzfahrzeugs 2) sein.

Die Steuer- und Auswertevorrichtung 1 umfasst beispielhaft einen Prozessor 10 und verbunden mit dem Prozessor 10 einen ersten Speicher als Programm- und Datenspeicher 11, einen zweiten Speicher als Hauptspeicher 12 sowie eine Kommunikationsschnittstelle 13. Ferner kann das mobile Gerät 1 optional eine zweite Kommunikationsschnittstelle 15 umfassen.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Steuer- und Auswertevorrichtung 1 auch mehrere Prozessoren 10 umfassen kann.

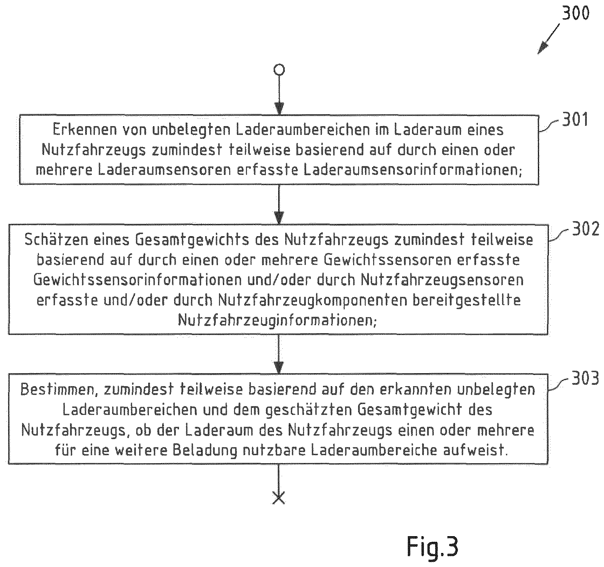

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines Computerprogramms gemäß der Erfindung, das Programmanweisungen umfasst, die den Prozessor 10 veranlassen, das Verfahren gemäß der Erfindung (z.B. das Verfahren gemäß dem in Fig. 3 dargestellten Flussdiagram 300) auszuführen und/oder zu steuern, wenn der Prozessor 10 diese in Programmspeicher 11 gespeicherten Programmanweisungen ausführt.

Programmspeicher 11 enthält ferner beispielsweise das Betriebssystem der Steuer- und Auswertevorrichtung 1, das beim Starten der Steuer- und Auswertevorrichtung 1 zumindest teilweise in Hauptspeicher 12 geladen und vom Prozessor 10 ausgeführt wird. Insbesondere wird beim Starten des mobilen Geräts 1 zumindest ein Teil des Kerns des Betriebssystems in den Hauptspeicher 12 geladen und von Prozessor 10 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Steuer- und Auswertevorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 11 auch Teil des Prozessors 10 sein.

Prozessor 10 steuert die drahtgebundene Kommunikationsschnittstelle 13, welche beispielsweise als Ethernet-, CAN-, K-Leitungs-, LIN- oder Flexray-Schnittstelle ausgebildet ist. Sie ist beispielsweise eingerichtet zur drahtgebundenen Kommunikation mit einem oder mehreren Nutzfahrzeugsensoren und/oder Nutzfahrzeugkomponenten eines Nutzfahrzeugs (z.B. des in Fig. 2 gezeigten Nutzfahrzeugs 2) über eine oder mehrere drahtgebundene Kommunikationsverbindungen eines Ethernet-Netzwerk oder eines CAN-, K-Leitungs-, LIN- oder Flexray-Bussystem des Nutzfahrzeugs. Zum Beispiel kann die Steuer- und Auswertevorrichtung 1 durch die Kommunikationsschnittstelle 13 Nutzfahrzeuginformationen von den Nutzfahrzeugsensoren und/oder Nutzfahrzeugkomponenten empfangen. Ethernet ist zum Beispiel in den Standards der IEEE-802.3-Familie spezifiziert. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

Außerdem steuert Prozessor 10 die optionale drahtlose Kommunikationsschnittstelle 14, welche beispielsweise als Bluetooth-, WLAN-, GSM-, UMTS- und/oder LTE-Schnittstelle ausgebildet ist. Sie ist beispielsweise eingerichtet zur Kommunikation mit einer oder mehreren entfernten Vorrichtungen wie einem Gabelstapler oder einem Server. Zum Beispiel kann die Steuer- und Auswertevorrichtung 1 durch die Kommunikationsschnittstelle 14 Gewichtssensorinformationen von dem Gabelstapler empfangen und/oder Beladungsinformationen an den Server senden. Die Bluetooth Spezifikationen sind derzeit unter https://www.bluetooth.com erhältlich. WLAN ist zum Beispiel in den Standards der IEEE-802.11-Familie spezifiziert. Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich.

Die Komponenten 10 bis 14 der Steuer- und Auswertevorrichtung 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Steuer- und Auswertevorrichtung 1 neben den Komponenten 10 bis 14 weitere Komponenten wie beispielsweise eine Benutzerschnittstelle umfassen kann.

Fig. 2 sind schematische Darstellungen einer beispielhaften Ausführungsform eines Nutzfahrzeugs gemäß der Erfindung. Das Nutzfahrzeug umfasst in Fig. 2 einen Sattelauflieger 2 und ein Zugfahrzeug 3.

Im Folgenden wird die beispielhafte Ausführungsform des Sattelaufliegers 2 zunächst anhand von Fig. 2 erläutert. Sattelauflieger 2 umfasst einen Laderaum 20. Der Laderaum 20 des Sattelaufliegers 2 wird oben durch das Laderaumdach 21 und unten durch den Laderaumboden 22 begrenzt. Ferner wird der Laderaum durch die nicht mit Bezugszeichen versehene Stirnwand und Rückwand sowie nicht dargestellte seitliche Begrenzungsflächen (z.B. Seitenplanen begrenzt). Der Laderaum 20 ist beispielhaft mit einem Transportgut 23 in Form eines Stückguts beladen.

Im Laderaumboden 22 sind eine Vielzahl von Lichtsignalsendern 24 (dargestellt durch ein Dreieck) angeordnet. Ferner sind im Laderaumdach eine Vielzahl von Lichtsignalsensoren 25 (dargestellt durch einen Kreis) angeordnet. Zum Beispiel sind die Lichtsignalsender 24 und die Lichtsignalsensoren 25 in Form von Streifen in dem Laderaumboden 22 und/oder dem Laderaumdach 21 eingelassen.

Die Vielzahl von Lichtsignalsendern 24 und die Vielzahl von Lichtsignalsensoren 25 sind somit an gegenüberliegenden Begrenzungsflächen des Laderaums 20 (d.h. dem Laderaumboden 22 und dem Laderaumdach 21] angeordnet Dabei bilden jeweils Paar aus gegenüberliegend angeordnetem Lichtsignalsender und Lichtsignalsensor eine Lichtschranke.

Der Laderaum 20 ist in mehrere Laderaumbereiche unterteilbar. Im Folgenden wird beispielhaft davon ausgegangen, dass ein Laderaumbereich einen Bereich in dem Laderaum 20 beschreibt, der am Laderaumboden eine quadratische Grundfläche mit einer Seitenlänge von 0,4 m hat Die Anzahl und Anordnung der Lichtsignalsender 24 und der Lichtsignalsensoren 25 ist beispielsweise derart gewählt, dass jeden der Laderaumbereiche des Laderaums 20 zumindest eine Lichtschranke gebildet wird, die eingerichtet ist, den jeweiligen Laderaumbereich zu überwachen.

Dabei soll unter dem Überwachen des jeweiligen Laderaumbereich verstand werden, dass ein von dem jeweiligen Lichtsignalsender gesendetes Lichtsignal (z.B. Lichtsignal 26) durch ein in dem jeweiligen Laderaumbereich angeordnetes Transportgut unterbrochen wird, so dass der jeweilige Lichtsignalsensor 25 das Lichtsignal nichterfasst, wenn der jeweilige Laderaumbereich belegt ist.

Jeder der Lichtsignalsensoren 25 ist beispielsweise eingerichtet, eine jeweilige Laderaumsensorinformation über die Kommunikationsverbindung 26 an die Steuer- und Auswertevorrichtung 1 zu senden, die, wenn eine Unterbrechung des Lichtsignals erfasst wurde, eine Angabe repräsentiert, dass der jeweilige Laderaumbereich belegt ist und, wenn keine Unterbrechung des Lichtsignals erfasst wurde, eine Angabe repräsentiert, dass der jeweilige Laderaumbereich unbelegt ist.

Ferner umfasst der Sattelauflieger 2 Achslastsensoren 27 (durch ein Viereck dargestellt) sowie die Zugmaschine 3 Achslastsensoren 30, die jeweils eingerichtet sind, eine jeweilige Nutzfahrzeugsensorinformation, die eine für das auf der jeweiligen Achse des Sattelaufliegers 2 und der Zugmaschine 3 lastende Gewicht (hier beispielhaft symbolisiert durch die Pfeile 28 und 29) charakteristische Eigenschaft und/oder Zustand repräsentiert, zu erfassen und über die Verbindung 26 an die an die Steuer- und Auswertevorrichtung 1 zu senden.

Die Verbindung 26 ist beispielsweise eine Kommunikationsverbindung eines Ethernet-Netzwerks oder eines CAN-, K-Leitungs-, LIN- oder Flexray Bussystems des Nutzfahrzeugs.

Fig. 3 zeigt ein Flussdiagramm 300 eines Ausführungsbeispiels eines Verfahrens gemäß der Erfindung. Im Folgenden wird beispielhaft angenommen, dass die Schritte 301 bis 303 des Flussdiagramms 300 durch die Steuer- und Auswertevorrichtung 1 des Sattelaufliegers 2 (vgl. Fig. 2) ausgeführt werden.

In einem Schritt 301 werden unbelegte Laderaumbereiche im Laderaum des Nutzfahrzeugs (d.h. im Laderaum 20 des Sattelaufliegers 2) zumindest teilweise basierend auf durch einen oder mehrere Laderaumsensoren erfasste Laderaumsensorinformationen erkannt.

Die Laderaumsensoren entsprechen beispielsweise den oben offenbarten Lichtsignalsensoren 25. Dementsprechend entsprechend die Laderaumsensorinformationen beispielsweise den von den Lichtsignalsensoren 25 über die Verbindung 26 an die Steuer- und Auswertevorrichtung 1 gesendeten Laderaumsensorinformationen, die für jeden der Laderaumbereich eine Angabe repräsentiert, ob der jeweilige Laderaumbereich belegt oder unbelegt ist. In Schritt 301 können zumindest teilweise basierend auf diesen Laderaumsensorinformationen alle Laderaumbereiche als unbelegt erkannt werden, für die die Laderaumsensoren eine entsprechende Angabe repräsentieren. Alle anderen Laderaumbereiche werden in Schritt 301 beispielsweise als belegt erkannt Als Ergebnis des Erkennens in Schritt 301 werden beispielsweise Belegungsinformationen erhalten, die die als unbelegt und/oder als belegt erkannten Laderaumbereiche repräsentieren und/oder die Anzahl der als unbelegt und/oder als belegt erkannten Laderaumbereiche repräsentieren.

Programmanweisungen zum Ausführen des Schritts 301 sind beispielsweise in Programmspeicher 11 der Steuer- und Auswertevorrichtung 1 gespeichert.

In einem Schritt 302 wird ein Gesamtgewicht des Nutzfahrzeugs (d.h. des Nutzfahrzeugs umfassend den Sattelauflieger 2 und die Zugmaschine 3) zumindest teilweise basierend auf durch einen oder mehrere Gewichtssensoren erfasste Gewichtssensorinformationen und/oder durch Nutzfahrzeugsensoren erfasste und/oder durch Nutzfahrzeugkomponenten bereitgestellte Nutzfahrzeuginformationen geschätzt. Es versteht sich, dass die Erfindung nicht auf das Schätzen des Gesamtgewichts beschränkt ist, sondern das Gesamtgewicht auch bestimmt werden kann. Das im Folgenden offenbarte Schätzen des Gesamtgewichts des Nutzfahrzeugs (d.h. des Nutzfahrzeugs umfassend den Sattelauflieger 2 und die Zugmaschine 3) soll somit lediglich als eine beispielhafte Ausführungsform für das Bestimmen und/oder Schätzen des Gesamtgewichts eines Nutzfahrzeugs verstanden werden.

Wie oben offenbart, umfasst der Sattelauflieger 2 Achslastsensoren 27 sowie die Zugmaschine 3 Achslastsensoren 30, die jeweils eingerichtet sind, eine jeweilige Nutzfahrzeugsensorinformation, die eine für das auf der jeweiligen Achse des Sattelaufliegers 2 und der Zugmaschine 3 lastende Gewicht charakteristische Eigenschaft und/oder Zustand repräsentiert, zu erfassen und über die Verbindung 26 an die an die Steuer- und Auswertevorrichtung 1 zu senden.

Das Schätzen des Gesamtgewichts des Nutzfahrzeugs kann in Schritt 302 zumindest teilweise basierend auf diesen Nutzfahrzeuginformationen wie folgt erfolgen:
1. Zum Beispiel kann in Schritt 302 zunächst die Summe der durch die Nutzfahrzeuginformationen repräsentierten auf den einzelnen Achsen lastenden Gewichte gebildet werden.
2. Anschließend wird die Differenz zwischen dieser Summe und der Summe der im unbeladenen Zustand auf den einzelnen Achsen lastenden Gewichte gebildet, um das Gewicht der in den Laderaum 20 geladenen Transportgüter bestimmen zu können.
3. Danach wird das bestimmte Gewicht der in den Laderaum 20 geladenen mit dem Leergewicht des Sattelaufliegers 2 und der Zugmaschine 3 und mit einem Sicherheitszuschlag (z.B. 500 kg oder 750 kg, z.B. für Unsicherheiten wie das Gewicht des Kraftstoffs und des Fahrers) addiert, um das geschätzte Gesamtgewicht des Nutzfahrzeugs zu erhalten. Zum Beispiel werden als Ergebnis des Schätzens Gesamtgewichtsinformationen erhalten, die das geschätzte Gesamtgewicht des Nutzfahrzeugs repräsentieren.

Das Leergewicht des Sattelaufliegers 2 und der Zugmaschine 3 und der Sicherheitszuschlag werden durch in Programmspeicher 11 der Steuer- und Auswertevorrichtung 1 gespeicherte Programmanweisungen zum Ausführen des Schritts 302 repräsentiert.

In einem Schritt 303 wird zumindest teilweise basierend auf den als unbelegt erkannten Laderaumbereichen und dem geschätzten Gesamtgewicht des Nutzfahrzeugs bestimmt, ob der Laderaum des Nutzfahrzeugs (d.h. der Laderaum 20 des Sattelaufliegers 2) einen oder mehrere für eine weitere Beladung nutzbare Laderaumbereiche aufweist.

Das Bestimmen in Schritt 303 basiert beispielsweise zumindest teilweise auf den Ergebnissen der Schritte 301 und 302. Zum Beispiel kann das Bestimmen in Schritt 303 umfassen:
- Bestimmen, ob das geschätzte Gesamtgewicht des Nutzfahrzeugs (z.B. das durch als Ergebnis des Schritts 302 erhaltene Gewichtsinformationen repräsentierte geschätzte Gesamtgewicht) unterhalb des zulässigen Gesamtgewicht des Nutzfahrzeugs liegt, wobei nur dann bestimmt wird, dass der Laderaum des Nutzfahrzeugs (d.h. der Laderaum 20 des Sattelaufliegers 2) einen oder mehrere für eine Beladung nutzbare Laderaumbereiche aufweist, wenn bestimmt wird, dass das geschätzte Gesamtgewicht des Nutzfahrzeugs unterhalb des zulässigen Gesamtgewicht des Nutzfahrzeugs liegt, und zumindest ein unbelegter Laderaumbereiche im Laderaum des Nutzfahrzeugs erkannt wird (z.B. wenn die als Ergebnis des Schritts 301 erhaltenen Belegungsinformationen zumindest einen unbelegten Laderaumbereich rund/oder eine Anzahl von zumindest einem unbelegten Laderaumbereich repräsentieren).

Wenn in Schritt 303 bestimmt wird, dass der Laderaum des Nutzfahrzeugs einen oder mehrere für eine Beladung nutzbare Laderaumbereiche aufweist, stellt die Auswerte- und Steuervorrichtung 1 beispielsweise Beladungsinformationen bereit, wobei die Beladungsinformationen eine oder mehrere der folgenden Angaben umfassen und/oder repräsentieren:
- Anzahl und/oder Fläche und/oder Volumen als unbelegt erkannten Laderaumbereiche im Laderaum des Nutzfahrzeugs (z.B. entsprechend den als Ergebnis des Schritts 301 erhaltenen Belegungsinformationen) ;
- geschätztes Gesamtgewicht des Nutzfahrzeugs (z.B. entsprechend den als Ergebnis des Schritts 302 erhaltenen Gewichtsinformationen);
- zulässiges Gesamtgewicht des Nutzfahrzeugs;
- Differenzgewicht zwischen dem geschätzten Gesamtgewicht des Nutzfahrzeugs und dem zulässigen Gesamtgewicht des Nutzfahrzeugs, das für eine weitere Beladung verfügbar ist;
- Nutzfahrzeugtyp des Nutzfahrzeugs;
- Ladezertifikate des Nutzfahrzeugs.

Dabei soll unter dem Bereitstellen der Beladungsinformationen zum Beispiel verstanden werden, dass die Beladungsinformationen zum Abrufen durch eine entfernte Vorrichtung wie einen Server (z.B. über eine drahtlose Kommunikationsverbindung) bereitgestellt und/oder an eine entfernte Vorrichtung wie einen Server (z.B. über eine drahtlose Kommunikationsverbindung) gesendet werden.

Beispiele für Angaben zum Nutzfahrzeugtyp sind beispielsweise Angaben, die den Sattelaufliegertyp (z.B. Planenaufbau, Curtainsider, Kofferaufbau, für Trockenfracht und/oder für Tiefkühlfracht) repräsentieren geeignet Beispiele für Angaben zu Ladezertifikaten sind Angaben, die Ladezertifkate des Sattelaufliegers (z.B. Code XL, Gefahrstoffe, Pharma) repräsentieren.

Die Beladungsinformationen können von der entfernten Vorrichtung beispielsweise genutzt werden, um zu bestimmen, mit welchen Transportgütern das Nutzfahrzeug weiter beladen werden kann.

Das zulässige Gesamtgewicht des Nutzfahrzeugs (d.h. des Nutzfahrzeugs umfassend den Sattelauflieger 2 und die Zugmaschine 3), der Nutzfahrzeugtyp des Nutzfahrzeugs sowie Ladezertifikate des Nutzfahrzeugs werden beispielsweise durch in Programmspeicher 11 der Steuer- und Auswertevorrichtung 1 gespeicherte Programmanweisungen zum Ausführen des Schritts 303 repräsentiert.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

## Patentansprüche

1. Verfahren zum Bestimmen, ob ein Laderaum (20) eines Nutzfahrzeugs (2, 3) einen oder mehrere für eine weitere Beladung nutzbare Laderaumbereiche aufweist, und wobei der Laderaum (20) in eine Vielzahl von Laderaumbereichen unterteilbar ist, wobei das Verfahren umfasst:
- Erkennen (301) von unbelegten Laderaumbereichen in dem Laderaum (20) zumindest teilweise basierend auf durch einen oder mehrere Laderaumsensoren erfasste Laderaumsensorinformationen;
- Bestimmen und/oder Schätzen (302) eines Gesamtgewichts des Nutzfahrzeugs (2, 3) zumindest teilweise basierend auf durch einen oder mehrere Gewichtssensoren erfasste Gewichtssensorinformationen und/oder durch Nutzfahrzeugsensoren erfasste und/oder durch Nutzfahrzeugkomponenten bereitgestellte Nutzfahrzeuginformationen;
- Bestimmen (303), zumindest teilweise basierend auf den als unbelegt erkannten Laderaumbereichen und dem bestimmten und/oder geschätzten Gesamtgewicht des Nutzfahrzeugs (2, 3), ob der Laderaum (20) des Nutzfahrzeugs (2, 3) einen oder mehrere für eine weitere Beladung nutzbare Laderaumbereiche aufweist;
**dadurch gekennzeichnet, dass**
das Bestimmen, ob der Laderaum (20) des Nutzfahrzeugs (2, 3) einen oder mehrere für eine Beladung nutzbare Laderaumbereiche aufweist, umfasst:
Bestimmen, ob im Laderaum (20) des Nutzfahrzeugs (2, 3) zumindest ein unbelegter Laderaumbereich vorhanden ist, der für eine weitere Beladung zugänglich ist, wobei nur dann bestimmt wird, dass der Laderaum (20) des Nutzfahrzeugs (2, 3) einen oder mehrere für eine Beladung nutzbare Laderaumbereiche aufweist, wenn bestimmt wird, dass im Laderaum (20) des Nutzfahrzeugs (2, 3) zumindest ein unbelegter Laderaumbereich vorhanden ist, der für eine weitere Beladung zugänglich ist.

2. Verfahren nach Anspruch 1, ferner umfassend:
- Erhalten und/oder Erfassen der Laderaumsensorinformationen;
- Erhalten und/oder Erfassen der Gewichtssensorinformationen und/oder der Nutzfahrzeuginformationen.

3. Verfahren nach einem der Ansprüche 1 und 2, wobei die Laderaumsensoren einen oder mehrere der folgenden Sensoren und/oder Sensoranordnungen umfassen:
- eine Lichtschranke (24, 25);
- einen Lichtsensor (25);
- ein Photomischdetektor;
- ein Ultraschallsensor;
- eine Kamera;
- ein Laserscanner;
- ein Funksensor.

4. Verfahren nach einem der Ansprüche 1 bis 3, wobei die Gewichtssensoren Teil einer oder mehrerer der folgenden Vorrichtungen sind:
- eine Fördervorrichtung, insbesondere ein Gabel- und/oder Hubstapler;
- eine Nutzfahrzeugwaage (2, 3);
- ein Transportgut (23);
- ein Transportbehälter, insbesondere eine Transportpaletter und/oder eine Gitterbox.

5. Verfahren nach einem der Ansprüche 1 bis 4, wobei die Nutzfahrzeuginformationen durch einen oder mehrere der folgenden Nutzfahrzeugsensoren des Nutzfahrzeugs (2, 3) erfasst werden:
- ein Gewichtssensor;
- ein Achslastsensor (27, 30), insbesondere ein Drucksensor eines Luftfederbalgs.

6. Verfahren nach einem der Ansprüche 1 bis 5, wobei die Nutzfahrzeuginformationen von einem oder mehreren der folgenden Nutzfahrzeugkomponenten des Nutzfahrzeugs (2, 3) bereitgestellt werden:
- ein Steuergerät, insbesondere ein Getriebe- und/oder Motorsteuergerät;
- ein Getriebesystem;
- ein elektronisches Bremssystem.

7. Verfahren nach einem der Ansprüche 1 bis 6, wobei das Bestimmen, ob der Laderaum (20) des Nutzfahrzeugs (2, 3) einen oder mehrere für eine Beladung nutzbare Laderaumbereiche aufweist, umfasst:
- Bestimmen, ob das bestimmte und/oder geschätzte Gesamtgewicht des Nutzfahrzeugs (2, 3) unterhalb des zulässigen Gesamtgewicht des Nutzfahrzeugs (2, 3) liegt, wobei nur dann bestimmt wird, dass der Laderaum (20) des Nutzfahrzeugs (2, 3) einen oder mehrere für eine Beladung nutzbare Laderaumbereiche aufweist, wenn bestimmt wird, dass das bestimmte und/oder geschätzte Gesamtgewicht des Nutzfahrzeugs (2, 3) unterhalb des zulässigen Gesamtgewicht des Nutzfahrzeugs (2, 3) liegt, und zumindest ein unbelegter Laderaumbereich im Laderaum (20) des Nutzfahrzeugs (2, 3) erkannt wird.

8. Verfahren nach einem der Ansprüche 1 bis 7, ferner umfassend:
- Bereitstellen von Beladungsinformationen, wenn bestimmt wird, dass der Laderaum (20) des Nutzfahrzeugs (2, 3) einen oder mehrere für eine Beladung nutzbare Laderaumbereiche aufweist, wobei die Beladungsinformationen eine oder mehrere der folgenden Angaben umfassen und/oder repräsentieren:
- Anzahl und/oder Fläche und/oder Volumen der als unbelegt erkannten Laderaumbereiche im Laderaum (20) des Nutzfahrzeugs (2, 3);
- Anzahl und/oder Fläche und/oder Volumen der als unbelegt erkannten Laderaumbereiche im Laderaum (20) des Nutzfahrzeugs (2, 3), für die bestimmt wurde, dass sie für eine weitere Beladung zugänglich sind;
- bestimmtes und/oder geschätztes Gesamtgewicht des Nutzfahrzeugs (2, 3);
- zulässiges Gesamtgewicht des Nutzfahrzeugs (2, 3);
- Differenzgewicht zwischen dem bestimmten und/oder geschätzten Gesamtgewicht des Nutzfahrzeugs (2, 3) und dem zulässigen Gesamtgewicht des Nutzfahrzeugs (2, 3), das für eine weitere Beladung verfügbar ist;
- Nutzfahrzeug (2, 3)typ des Nutzfahrzeugs (2, 3);
- Ladezertifikate des Nutzfahrzeugs (2, 3).

9. Verfahren nach einem der Ansprüche 1 bis 8, wobei ein Laderaumbereich einen Bereich in dem Laderaum (20) mit einer rechteckigen und/oder quadratischen Grundfläche und zumindest einer Seitenlänge von 0,4 m oder einem ganzzahligen Vielfachen von 0,4 m beschreibt

10. Verfahren nach einem der Ansprüche 1 bis 9, wobei ein Nutzfahrzeug (2, 3) ein Lastkraftwagen, ein Anhänger, ein Sattelauflieger oder ein Zuggespann ist.

11. Computerprogramm, umfassend Programmanweisungen, die dazu ausgebildet sind, bei Ausführung durch mindestens einen Prozessor eine Vorrichtung zu veranlassen, das Verfahren nach einem der Ansprüche 1 bis 10 auszuführen.

12. Vorrichtung eingerichtet zur Ausführung und/oder Steuerung des Verfahrens nach einem der Ansprüche 1 bis 10 oder umfassend jeweilige Mittel zur Ausführung und/oder Steuerung der Schritte des Verfahrens nach einem der Ansprüche 1 bis 10.

13. Nutzfahrzeug (2, 3) und/oder Nutzfahrzeugaufbau, umfassend:
- einen durch Begrenzungsflächen gebildeten Laderaum (20);
- eine Vorrichtung (1) nach Anspruch 12.

14. Nutzfahrzeug (2, 3) nach Anspruch 13, ferner umfassend:
- Nutzfahrzeugsensoren (2, 3) zum Erfassen und/oder Nutzfahrzeugkomponenten (2, 3) zum Bereitstellen von Nutzfahrzeuginformationen (2, 3) zum Bestimmen und/oder Schätzen eines Gesamtgewichts des Nutzfahrzeugs (2, 3) zumindest teilweise basierend auf den Nutzfahrzeuginformationen (2, 3).

## Claims

1. Method for determining if a cargo space (20) of a utility vehicle (2, 3) has one or more cargo space areas usable for further loading, and wherein the cargo space (20) is divisible into a plurality of cargo space areas, wherein the method comprises:
- identifying (301) unoccupied cargo space areas in the cargo space (20) based at least in part on cargo space sensor information detected by one or more cargo space sensors;
- determining and/or estimating (302) a total weight of the utility vehicle (2, 3) based at least in part on weight sensor information detected by one or more weight sensors and/or utility vehicle information detected by utility vehicle sensors and/or provided by utility vehicle components;
- determining (303), based at least in part on the cargo space areas identified as unoccupied and the determined and/or estimated total weight of the utility vehicle (2, 3), if the cargo space (20) of the utility vehicle (2, 3) has one or more cargo space areas usable for further loading;
**characterized in that**
- determining if the cargo space (20) of the utility vehicle (2, 3) has one or more cargo space areas usable for loading comprises:
- determining if in the cargo space (20) of the utility vehicle (2, 3) at least one unoccupied cargo space area is present that is accessible for further loading, wherein it is only determined that the cargo space (20) of the utility vehicle (2, 3) has one or more cargo space areas usable for loading if it is determined that in the cargo space (20) of the utility vehicle (2, 3) at least one unoccupied cargo space area is present that is accessible for further loading.

2. Method according to claim 1, further comprising:
- obtaining and/or detecting the cargo space sensor information;
- obtaining and/or detecting the weight sensor information and/or the utility vehicle information.

3. Method according to any one of claims 1 and 2, wherein the cargo space sensors comprise one or more of the following sensors and/or sensor arrangements:
- a light barrier (24, 25);
- a light sensor (25);
- a photomix detector;
- an ultrasonic sensor;
- a camera;
- a laser scanner;
- a radio sensor.

4. Method according to any one of claims 1 to 3, wherein the weight sensors are part of one or more of the following devices:
- a conveyor device, in particular a forklift and/or a lift truck;
- a utility vehicle scale (2, 3);
- a transport item (23);
- a transport container, in particular a transport pallet and/or a lattice box.

5. Method according to any one of claims 1 to 4, wherein the utility vehicle information is detected by one or more of the following utility vehicle sensors of the utility vehicle (2, 3):
- a weight sensor;
- an axle load sensor (27, 30), in particular a pressure sensor of an air spring bellows.

6. Method according to any one of claims 1 to 5, wherein the utility vehicle information is provided by one or more of the following utility vehicle components of the utility vehicle (2, 3):
- a control device, in particular a transmission and/or engine control device;
- a transmission system;
- an electronic braking system.

7. Method according to any one of claims 1 to 6, wherein determining if the cargo space (20) of the utility vehicle (2, 3) has one or more cargo space areas usable for loading comprises:
- determining if the determined and/or estimated total weight of the utility vehicle (2, 3) is below the permissible total weight of the utility vehicle (2, 3), wherein it is only determined that the cargo space (20) of the utility vehicle (2, 3) has one or more cargo space areas usable for loading, if it is determined that the determined and/or estimated total weight of the utility vehicle (2, 3) is below the permissible total weight of the utility vehicle (2, 3), and at least one unoccupied cargo space area is identified in the cargo space (20) of the utility vehicle (2, 3).

8. Method according to any one of claims 1 to 7, further comprising:
- providing loading information if it is determined that the cargo space (20) of the utility vehicle (2, 3) has one or more cargo space areas usable for loading, wherein the loading information comprises and/or represents one or more of the following:
- number and/or area and/or volume of the cargo space areas identified as unoccupied in the cargo space (20) of the utility vehicle (2, 3);
- number and/or area and/or volume of cargo space areas identified as unoccupied in the cargo space (20) of the utility vehicle (2, 3) for which it has been determined they are accessible for further loading;
- determined and/or estimated total weight of the utility vehicle (2, 3);
- permissible total weight of the utility vehicle (2, 3);
- differential weight between the determined and/or estimated total weight of the utility vehicle (2, 3) and the permissible total weight of the utility vehicle (2, 3) that is available for further loading;
- utility vehicle (2, 3)type of the utility vehicle (2, 3);
- load certificates of the utility vehicle (2, 3).

9. Method according to any one of claims 1 to 8, wherein a cargo space area describes an area in the cargo space (20) with a rectangular and/or square base area and at least one side length of 0.4 m or an integral multiple of 0.4 m.

10. Method according to any one of claims 1 to 9, wherein a utility vehicle (2, 3) is a truck, a trailer, a semi-trailer or a tractor-trailer combination.

11. Computer program comprising program instructions that are configured to, when executed by at least one processor, cause a device to perform the method according to any one of claims 1 to 10.

12. Device configured to perform and/or control the method according to any one of claims 1 to 10 or comprising respective means for performing and/or controlling the steps of the method according to any one of claims 1 to 10.

13. Utility vehicle (2, 3) and/or utility vehicle superstructure, comprising:
- a cargo space (20) formed by boundary surfaces;
- a device (1) according to claim 12.

14. Utility vehicle (2, 3) according to claim 13, further comprising:
- utility vehicle sensors (2, 3) for detecting and/or utility vehicle components (2, 3) for providing utility vehicle information (2, 3) for determining and/or estimating a total weight of the utility vehicle (2, 3) based at least in part on the utility vehicle information (2, 3).

## Revendications

1. Procédé pour déterminer si un espace de chargement (20) d'un véhicule utilitaire (2, 3) présente une ou plusieurs zones d'espace de chargement utilisables pour un chargement supplémentaire, et dans lequel l'espace de chargement (20) peut être divisé en une pluralité de zones d'espace de chargement, le procédé comprenant :
- le fait (301) de détecter des zones d'espace de chargement inoccupées dans l'espace de chargement (20), sur la base au moins en partie d'informations de capteur d'espace de chargement détectées par un ou plusieurs capteurs d'espace de chargement ;
- le fait (302) de déterminer et/ou d'estimer un poids total du véhicule utilitaire (2, 3) en se basant au moins partiellement sur des informations de capteur de poids détectées par un ou plusieurs capteurs de poids et/ou des informations de véhicule utilitaire détectées par des capteurs de véhicule utilitaire et/ou fournies par des composants de véhicule utilitaire ;
- le fait (303), au moins en partie sur la base des zones de l'espace de chargement reconnues comme inoccupées et du poids total déterminé et/ou estimé du véhicule utilitaire (2, 3), de déterminer si l'espace de chargement (20) du véhicule utilitaire (2, 3) présente une ou plusieurs zones d'espace de chargement utilisables pour un autre chargement ;
**caractérisé en ce que**
la détermination de savoir si l'espace de chargement (20) du véhicule utilitaire (2, 3) présente une ou plusieurs zones d'espace de chargement utilisables pour un chargement comprend :
le fait de déterminer s'il existe dans l'espace de chargement (20) du véhicule utilitaire (2, 3) au moins une zone d'espace de chargement inoccupée qui est accessible pour un autre chargement, sachant que l'on détermine que l'espace de chargement (20) du véhicule utilitaire (2, 3) présente une ou plusieurs zones d'espace de chargement utilisables pour un chargement uniquement lorsqu'on détermine qu'il existe dans l'espace de chargement (20) du véhicule utilitaire (2, 3) au moins une zone d'espace de chargement inoccupée qui est accessible pour un autre chargement.

2. Procédé selon la revendication 1, comprenant en outre :
- obtenir et/ou détecter les informations de capteur d'espace de chargement ;
- obtenir et/ou détecter les informations de capteur de poids et/ou les informations de véhicule utilitaire.

3. Procédé selon l'une des revendications 1 et 2, dans lequel les capteurs d'espace de chargement comprennent un ou plusieurs des capteurs et/ou ensembles de capteurs suivants :
- une cellule photoélectrique (24, 25) ;
- un détecteur de lumière (25) ;
- un détecteur à photomélange ;
- un détecteur à ultrasons ;
- un appareil de prise de vues ;
- un scanner laser ;
- un capteur radio.

4. Procédé selon l'une quelconque des revendications 1 à 3, dans lequel les capteurs de poids font partie d'un ou plusieurs des dispositifs suivants :
- un dispositif de manutention, notamment un chariot élévateur et/ou un chariot élévateur à fourche ;
- un pont-bascule pour véhicules utilitaires (2, 3) ;
- un produit à transporter (23) ;
- un conteneur de transport, notamment une palette de transport et/ou un conteneur à claire-voie.

5. Procédé selon l'une des revendications 1 à 4, dans lequel les informations relatives au véhicule utilitaire sont saisies par un ou plusieurs des capteurs de véhicule utilitaire suivants du véhicule utilitaire (2, 3) :
- un capteur de poids ;
- un capteur (27, 30) de charge par essieu, notamment un capteur de pression d'un soufflet de suspension pneumatique.

6. Procédé selon l'une des revendications 1 à 5, dans lequel les informations relatives au véhicule utilitaire sont fournies par un ou plusieurs des composants suivants du véhicule utilitaire (2, 3) :
- une unité de commande, notamment une unité de commande de boîte de vitesses et/ou de moteur ;
- un système de transmission ;
- un système de freinage électronique.

7. - Procédé selon l'une des revendications 1 à 6, dans lequel la détermination du fait de savoir si l'espace de chargement (20) du véhicule utilitaire (2, 3) comporte une ou plusieurs zones d'espace de chargement aptes à être utilisées pour un chargement comprend :
- le fait de déterminer si le poids total déterminé et/ou estimé du véhicule utilitaire (2, 3) est inférieur au poids total autorisé du véhicule utilitaire (2, 3), auquel cas seulement il est déterminé que l'espace de chargement (20) du véhicule utilitaire (2, 3) présente une ou plusieurs zones d'espace de chargement utilisables pour un chargement, lorsqu'il est déterminé que le poids total déterminé et/ou estimé du véhicule utilitaire (2, 3) est inférieur au poids total autorisé en charge du véhicule utilitaire (2, 3), et au moins une zone d'espace de chargement non occupée est détectée dans l'espace de chargement (20) du véhicule utilitaire (2, 3).

8. Procédé selon l'une quelconque des revendications 1 à 7, comprenant en outre :
- le fait de fournir des informations de chargement lorsqu'il est déterminé que l'espace de chargement (20) du véhicule utilitaire (2, 3) comporte une ou plusieurs zones d'espace de chargement aptes à être utilisées pour un chargement, les informations de chargement comprenant et/ou représentant une ou plusieurs des indications suivantes :
- nombre et/ou surface et/ou volume des zones de chargement identifiées comme inoccupées dans l'espace de chargement (20) du véhicule utilitaire (2, 3) ;
- nombre et/ou surface et/ou volume des zones de l'espace de chargement (20) du véhicule utilitaire (2, 3) identifiées comme étant inoccupées et pour lesquelles il a été déterminé qu'elles sont accessibles pour un chargement supplémentaire ;
- poids total déterminé et/ou estimé du véhicule utilitaire (2, 3) ;
- poids total autorisé du véhicule utilitaire (2, 3) ;
- différence de poids entre le poids total déterminé et/ou estimé du véhicule utilitaire (2, 3) et le poids total autorisé du véhicule utilitaire (2, 3) qui est disponible pour un chargement supplémentaire ;
- type de véhicule utilitaire (2, 3) du véhicule utilitaire (2, 3) ;
- certificats de chargement du véhicule utilitaire (2, 3).

9. Procédé selon l'une quelconque des revendications 1 à 8, dans lequel une zone d'espace de chargement décrit une zone dans l'espace de chargement (20) ayant une surface de base rectangulaire et/ou carrée et au moins une longueur de côté de 0,4 m ou un multiple entier de 0,4 m.

10. Procédé selon l'une quelconque des revendications 1 à 9, dans lequel un véhicule utilitaire (2, 3) est un camion, une remorque, une semi-remorque ou un attelage.

11. - Programme d'ordinateur comprenant des instructions de programme configurées pour, lorsqu'elles sont exécutées par au moins un processeur, amener un dispositif à mettre en oeuvre le procédé selon l'une quelconque des revendications 1 à 10.

12. Dispositif agencé pour mettre en oeuvre et/ou commander le procédé selon l'une quelconque des revendications 1 à 10 ou comprenant des moyens respectifs pour mettre en oeuvre et/ou commander les étapes du procédé selon l'une quelconque des revendications 1 à 10.

13. Véhicule utilitaire (2, 3) et/ou corps de véhicule utilitaire, comprenant :
- un espace de chargement (20) formé par des surfaces de délimitation ;
- un dispositif (1} selon la revendication 12.

14. Véhicule utilitaire (2, 3) selon la revendication 13, comprenant en outre :
- des capteurs de véhicule utilitaire (2, 3) pour détecter, et/ou des composants de véhicule utilitaire (2, 3,) pour fournir des informations de véhicule utilitaire (2, 3) afin de déterminer et/ou estimer un poids total du véhicule utilitaire (2, 3) au moins en partie sur la base des informations de véhicule utilitaire (2, 3).
